## Europäisches Patentamt

## European Patent Office

## Office européen des brevets

(11) Veröffentlichungsnummer: **0 121 822**
**B1**

(12) # EUROPÄISCHE PATENTSCHRIFT

(45) Veröffentlichungstag der Patentschrift:
**29.06.88**

(51) Int. Cl.⁴: **G 01 S 1/48,** H 01 Q 3/40

(21) Anmeldenummer: **84102837.6**

(22) Anmeldetag: **15.03.84**

(54) **TACAN-Drehfunkfeuer.**

(30) Priorität: **30.03.83 DE 3311569**

(43) Veröffentlichungstag der Anmeldung:
**17.10.84 Patentblatt 84/42**

(45) Bekanntmachung des Hinweises auf die Patenterteilung:
**29.06.88 Patentblatt 88/26**

(84) Benannte Vertragsstaaten:
**DE FR GB IT**

(56) Entgegenhaltungen:
**DE-A-2 715 383**
**US-A-3 474 447**
**US-A-3 983 561**

**"Avionics Navigation Systems" von M. Kayton und W.R. Fried, John Wiley & Sons, Inc. N.Y., 1969, S. 187-192**

(73) Patentinhaber: **ALCATEL N.V., Strawinskylaan 537 (World Trade Center), NL- 1077 XX Amsterdam (NL)**

(84) Benannte Vertragsstaaten: **FR GB IT**

(73) Patentinhaber: **Standard Elektrik Lorenz Aktiengesellschaft, Hellmuth- Hirth- Strasse 42, D-7000 Stuttgart 40 (DE)**

(84) Benannte Vertragsstaaten: **DE**

(72) Erfinder: **Greving, Gerhard, Dr., Habichthöhe 74, D-7101 Untergruppenbach (DE)**
Erfinder: **Höfgen, Günther, Dr., Marderweg 8, D-7014 Kornwestheim (DE)**
Erfinder: **Zeitz, Rüdiger, Ditzenbrunnerstrasse 32, D-7257 Ditzingen (DE)**

(74) Vertreter: **Schmidt, Werner, Dipl.- Phys., Standard Elektrik Lorenz AG Patent- und Lizenzwesen Postfach 30 09 29, D-7000 Stuttgart 30 (DE)**

## Beschreibung

Die Erfindung geht aus von einem TACAN-Drehfunkfeuer wie im Oberbegriff des Anspruchs 1 angegeben. Ein solches Drehfunkfeuer ist aus der DE-A-2 715 383 bekannt. Dort ist angegeben, daß das Prinzip, das dem beschriebenen VOR-Drehfunkfeuer zugrunde liegt, auch bei der Realisierung eines TACAN-Drehfunkfeuers verwendet werden kann. Ein solches TACAN-Drehfunkfeuer ist weiterhin aus der US-A-3 474 447 bekannt.

Bei dem bekannten TACAN-Drehfunkfeuer sind im Raum gleichzeitig das obere und das untere 15-Hz-Seitenbandsignal des Trägers und das obere und untere 135-Hz-Seitenbandsignal des Trägers als 15-Hz-Grobmeß- und 135-Hz-Feinmeßsignal vorhanden. Soll für ein solches TACAN-Drehfunkfeuer das Prinzip der hochfrequenten Phasendrehfelder angewandt werden, dann wird eine Antenne mit mindestens 27 bis 36 Einzelantennen erforderlich, da zur Erzeugung der 135-Hz-Seitenbandsignale eine Modenspreizung (Differenz zwischen den Ordnungszahlen der hochfrequenten Phasendrehfelder) von 18 notwendig ist; die größte Ordnungszahl also $\geqslant$ /9/ ist.

Aufgabe der Erfindung ist es, ein TACAN-Drehfunkfeuer anzugeben, das einfacher als das bekannte TACAN-Drehfunkfeuer realisierbar ist.

Die Lösung dieser Aufgabe erfolgt mit den im Anspruch 1 angegebenen Mitteln. Vorteilhafte Weiterbildungen sind den Unteransprüchen zu entnehmen.

Bei dem neuen TACAN-Drehfunkfeuer werden die beiden 135-Hz-Seitenbandsignale nicht gleichzeitig, sondern nacheinander erzeugt. Dadurch reduziert sich die Modenspreizung auf 9, und die betragsmäßig größte Ordnungszahl ist 5, wodurch eine Reduzierung der Zahl der Einzelantennen auf 16 möglich ist. Dadurch wird der notwendige technische Aufwand wesentlich reduziert

Es ist möglich, die Seitenbänder mittels steuerbarer Phasenschieber aus dem Trägersignal zu erzeugen.

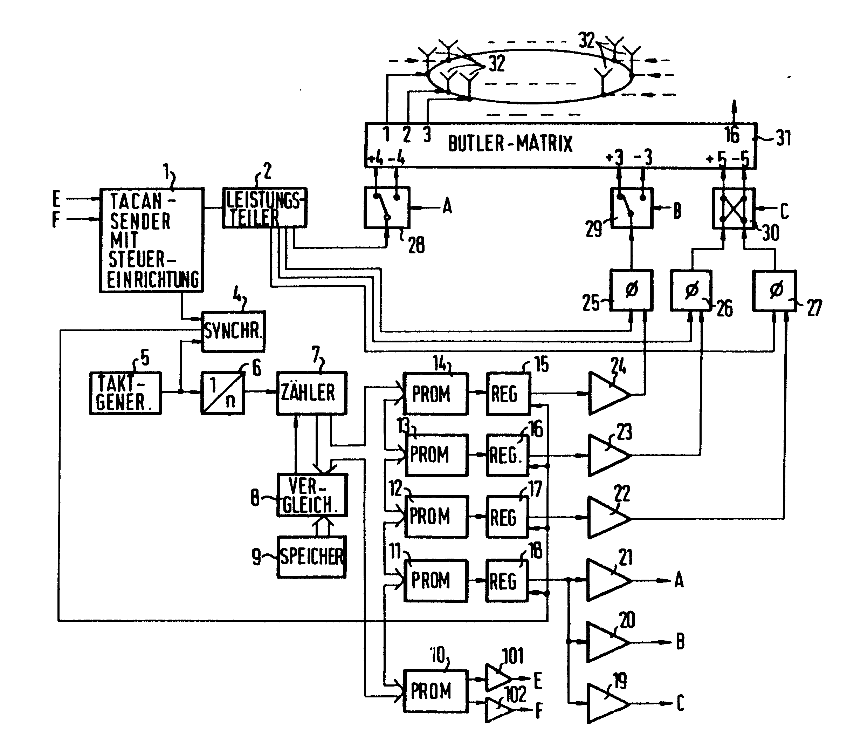

Die Erfindung wird anhand der einzigen Zeichnung, die ein Blockschaltbild des neuen TACAN-Drehfunkfeuers ist, beispielsweise näher erläutert zunächst wird der Aufbau und anschließend die Funktionsweise des neuen TACAN-Drehfunkfeuers erläutert.

Es ist ein TACAN-Sender 1 vorhanden, der in an sich bekannter Weise die Signale, die der TACAN-Antenne zuzuführen sind, erzeugt. Als Sender kann ein Sender wie in "Avionics Navigation Systems" von M. Kayton und W.R. Fried, John Wiley & Sons, Inc., New York, 1969, Seiten 187 bis 192, angegeben verwendet werden. Der TACAN-Sender enthält eine Steuereinrichtung die bewirkt, daß die erforderlichen Doppelimpulse und Impulsgruppen abgegeben werden. Weiterhin werden dem TACAN-Sender 1 zwei Signale E und F zugeführt, die bewirken, daß der TACAN-Sender zum richtigen Zeitpunkt die Hauptbezugsimpulse und die Hilfsbezugsimpulse abgibt. Die Steuereinrichtung erzeugt weiterhin einen Triggerimpuls.

Die zeitliche Lage des Triggerimpulses ist so gewählt, daß er stets etwa 6 µs vor der Abgabe von Doppelimpulsen bzw. Impulsgruppen vorhanden ist. Dieser Triggerimpuls wird einer Synchronisationseinrichtung 4 zugeführt.

In einem Leistungsteiler 2 wird das Ausgangssignal des TACAN-Senders 1 in vier Signale aufgeteilt, die einem ersten Schalter 28, bzw. einem ersten 25, zweiten 26 bzw. dritten 27 steuerbaren Phasenschieber zugeführt werden. Das Ausgangssignal des ersten Phasenschiebers wird zu einem zweiten Schalter 29, das des zweiten und dritten Phasenschiebers einem dritten Schalter 30 zugeführt. Der erste bzw. der zweite Schalter 29 sind so ausgebildet, daß sie das ihnen zugeführte Signal dem ersten (+4) oder zweiten (-4) bzw. dritten (+3) oder vierten (-3) Eingang einer Butler-Matrix 31 zuführen. Der dritte Schalter 30 ist so ausgeführt, daß er in seiner ersten Schaltstellung das eine ihm zugeführte Signal dem fünften (+5) und das andere ihm zugeführte Signal dem sechsten (-5) Eingang der Butler-Matrix 31 zuführt. In seiner anderen Schaltstellung führt er die ihm zugeführten Signale dem jeweils anderen Eingang (+5 bzw. -5) der Butler-Matrix zu.

Die Butler-Matrix des Ausführungsbeispiels hat sechs Eingänge und sechzehn Ausgänge und ist somit gegenüber der an sich bekannten Butler-Matrix, die gleich viele Ein- und Ausgänge aufweist, modifiziert. Jedem Ausgang ist eine Einzelantenne 32 nachgeschaltet. Die Einzelantennen sind äquidistant auf einem Kreis angeordnet. Das einem Eingang zugeführte Signal wird auf die sechzehn Ausgänge gleichmäßig verteilt. Die Ausgangssignale weisen jedoch unterschiedliche Phasen auf. Der Butler-Matrix werden gleichzeitig vier Signale zugeführt und folglich sind an jedem der sechzehn Ausgänge der Butler-Matrix ebenfalls vier Signale vorhanden, die vektoriell überlagert werden. Die Butler-Matrix ist so aufgebaut, daß die gewünschten Phasenverschiebungen (Phasenmoden) und Leistungsaufteilungen erzeugt werden.

In einem Taktgenerator 5 wird ein Taktsignal mit 6,048 MHz erzeugt. Dieses Signal wird einerseits der Synchronisationsschaltung 4 und andererseits einem Teiler 6 zugeführt, an dessen Ausgang ein Signal mit der Frequenz 2.160 Hz vorhanden ist. In der Synchronisationsschaltung wird der Triggerimpuls des TACAN-Senders 1 auf den Takt des Taktgenerators synchronisiert. Die Frequenz des Taktgenerators 5 ist so hoch gewählt, daß die Synchronisation nur eine geringe Verzögerung des Triggerimpulses bewirkt und zwischen der Auslösung der Schalter und Phasenschieber durch den synchronisierten Triggerimpuls und der Abgabe von Hochfrequenzimpulsen genügend Zeit ($\leqq$ 6 µs) zum Schalten der Schalter und Phasenschieber verbleibt. Es wird hiermit erreicht, daß der Schaltzeitpunkt in einer Lücke zwischen Impulspaaren oder Impulsgruppen bleibt und es nicht zu einer zeitlichen Überlappung mit einem Impulspaar oder einer Impulsgruppe kommt. Das Ausgangssignal des Teilers wird einem Zähler 7 zugeführt, der jeweils nach Erreichen eines Zählerstandes von m = 143 auf Null zurückgesetzt wird. Um dies zu erreichen, sind ein Speicher 9, in dem die Zahl m = 143 gespeichert ist, und ein Vergleicher 8, der den Zähler zurücksetzt, vorgesehen.

Weiterhin sind Lesespeicher 10 bis 14 vorgesehen. Die Ansteuerung der Adressen dieser Speicher erfolgt mittels der von dem Zähler 7 erzeugten Zählerstände.

Der Triggerimpuls bewirkt, daß die Daten, die in den Lesespeichern 11 bis 14 zu dem Zeitpunkt, zu dem das Triggersignal auftritt, vorhanden sind, in die Register 15 bis 18 übertragen werden. Da der Triggerimpuls mit dem Takt synchronisiert ist, ist sichergestellt, daß die am Ausgang der Lesespeicher vorhandenen Daten nicht gerade dann verändert werden, wenn die Register, ausgelöst durch den Triggerimpuls, gesetzt werden.

Bei bestimmten Zählerständen gibt der Lesespeicher PROM 10 an seinem Ausgang E bzw. F über Treiberstufen 101, 102 Impulse ab, die die Erzeugung der Hauptbezugsimpulsgruppe bzw. Hilfsbezugsimpulsgruppe im TACAN-Sender 1 auslösen Die Ausgänge E und F sind mit den Eingängen E und F des TACAN-Senders 1 verbunden.

Den Registern 15 bis 17, die auf die Lesespeicher (PROM) 12 bis 14 folgen, sind Treiberstufen 22 bis 24 nachgeschaltet, die jeweils einen steuerbaren Phasenschieber 25, 26, 27 steuern. Die steuerbaren Phasenschieber sind digitale 4-bit-Phasenschieber. Diese Phasenschieber werden über die PROM, Register und Treiberstufen so gesteuert, daß sie abwechselnd ein oberes bzw. unteres seitenband des ihm zugeführten Trägers erzeugen. Das Ausgangssignal des ersten steuerbaren Phasenschiebers wird dem zweiten Schalter 29 zugeführt und die Ausgangssignale der Phasenschieber 26 und 27 werden zu dem dritten Schalten 30 geführt. Das Ausgangssignal des Registers 18, das dem vierten PROM 11 nachgeschaltet ist, wird drei Treiberstufen 19, 20 und 21 zugeführt. Deren Ausgangssignale schalten die Schalter 28, 29, 30.

Es wurde erwähnt, daß die Signale an den Ausgängen der Butler-Matrix bei entsprechend niedriger Amplitude phasenverschoben sind. Diese Phasenverschiebungen kann man auch mittels einzelner steuerbarer Phasenschieber erzeugen. Eine solche Lösung ist zu der Butler-Matrix äquivalent, da in beiden Fällen erreicht wird, daß man an mehreren Ausgängen unterschiedlich phasenverschobene Signale erhält.

Nachfolgend wird die Funktionsweise des neuen TACAN-Drehfunkfeuers näher erläutert.

Das vom TACAN-Sender erzeugte Signal muß zur Erzeugung des 15-Hz-Grobmeßsignal und des 135-Hz-Feinmeßsignals mit 15 Hz und 135 Hz mit azimutabhängiger Phasenlage amplitudenmoduliert werden. Bei dem aus dem zitierten Buch bekannten TACAN-Drehfunkfeuer erfolgt dies durch mechanische Antennendiagrammrotation. Bei dem neuen TACAN-Drehfunkfeuer werden mittels der steuerbaren Phasenschieber 25, 26 jeweils gleichzeitig das obere und das untere 15-Hz-Seitenband und mit dem steuerbaren Phasenschieber 27 nacheinander das obere bzw untere 135 Hz-Seitenband erzeugt. Weiterhin werden während zweier Schaltzustände unterschiedliche hochfrequente Phasendrehfelder erzeugt.

Nachfolgend werden die beiden Schaltzustände beschrieben.

Schaltzustand I:

Der erste Schalter 28 führt das Trägersignal dem ersten Eingang der Butler-Matrix zu. Es wird ein hochfrequentes Phasendrehfeld mit der Ordnungszahl +4 erzeugt.

Der steuerbare Phasenschieber 25 wird so gesteuert, daß an seinem Ausgang das obere 15-Hz-Seitenband vorhanden ist. Dies wird dem dritten Eingang der Butler-Matrix zugeführt. Es wird ein hochfrequentes Phasendrehfeld mit der Ordnungszahl +3 erzeugt.

Der steuerbare Phasenschieber 26 wird so gesteuert, daß an seinem Ausgang das untere 15-Hz-Seitenband vorhanden ist. Dies wird dem fünften Eingang der Butler-Matrix zugeführt. Es wird ein hochfrequentes Phasendrehfeld mit der Ordnungszahl +5 erzeugt.

Der steuerbare Phasenschieber 27 wird so gesteuert, daß an seinem Ausgang das obere 135-Hz-Seitenband vorhanden ist. Dies wird dem sechsten Eingang der Butler-Matrix zugeführt. Es wird ein hochfrequentes Phasendrehfeld mit der Ordnungszahl -5 erzeugt.

Schaltzustand II:

Der erste Schalter 28 führt das Trägersignal dem zweiten Eingang der Butler-Matrix zu. Es wird ein hochfrequentes Phasendrehfeld mit der Ordnungszahl -4 erzeugt.

Der steuerbare Phasenschieber 25 wird so gesteuert, daß an seinem Ausgang das untere 15-Hz-Seitenband vorhanden ist. Dies wird dem vierten Eingang der Butler-Matrix zugeführt. Es wird ein hochfrequentes Phasendrehfeld mit der Ordnungszahl -3 erzeugt.

Der steuerbare Phasenschieber 26 wird so gesteuert, daß an seinem Ausgang das obere 15-Hz-Seitenband vorhanden ist. Dies wird dem sechsten Eingang der Butler-Matrix zugeführt. Es wird ein hochfrequentes Phasendrehfeld mit der Ordnungszahl -5 erzeugt.

Der steuerbare Phasenschieber 27 wird so gesteuert, daß an seinem Ausgang das untere 135-Hz-Seitenband vorhanden ist. Dies wird dem fünften Eingang der Butler-Matrix zugeführt. Es wird ein hochfrequentes Phasendrehfeld mit der Ordnungszahl +5 erzeugt.

Bei einem hochfrequenten Phasendrehfeld mit der Ordnungszahl ( ± )3 ist die Phasendifferenz zwischen dem ersten und dem v-ten Ausgang der Butler-Matrix ( ± ) (v-1) 67,5 Grad, bei den Ordnungszahlen ( ± )4 bzw. ( ± )5 sind die Beträge ( ± ) (v-1) · 90 Grad bzw. ( ± ) (v-1) 112,5 Grad.

Die Schalter und die steuerbaren Phasenschieber werden, wie bereits erwähnt, von den Ausgangssignalen der Treiberstufen angesteuert. Das Umschalten vom einen zum anderen Schaltzustand erfolgt periodisch mit 540 Hz. Das Umschalten muß mindestens so schnell erfolgen, daß im Empfänger, der die TACAN-Signale empfängt, eine Mittelwertbildung möglich ist.

Die erforderlichen Schalter- und Phasenschieberstellungen werden von dem in 1/15 sec. von 0...143 gleichförmig zählenden Zähler 7 und den PROMs (11...14) bestimmt. Jeder Zählerstellung (Adresse) entspricht eine vorgeschriebene in den PROMs gespeicherte Schalter- und Phasenschieberstellung. Bei Verwendung von 4-Bit digitalen Phasenschiebern wechselt die Information an den PROM-Ausgängen bei den PROMs 13 und 14 nach jeder 9-ten Adressenänderung des Zählers 7 und bei dem PROM 12 nach jeder Adressenänderung entsprechend der 15-Hz- bzw. 135-Hz-Modulation des Trägers. Die Phasenschieber müssen zur Erzeugung der Seitenbänder bezüglich der Drehrichtung, die den Phasengradienten festlegt, jeweils so gesteuert werden, daß sich insgesamt ein bekannterweise rechtsdrehendes TACAN-Diagramm ergibt. Im Einzelnen wird die Drehrichtungsänderung der Phasenschieber für die beiden Schaltzustände I und II mit den PROM-Inhalten 12 bis 14 gesteuert. Es wird, wie bereits erwähnt, mit einem einzigen Phasenschieber sowohl ein oberes oder ein unteres Seitenband erzeugt. Abhängig davon, ob gerade das obere oder das untere Seitenband erzeugt werden soll wird die Drehrichtung gewählt.

Zur Ansteuerung der HF-Schalter benutzt man zweckmäßiger Weise ebenfalls die Adressenänderung des Zählers 7. Eine Schaltfrequenz von 540 Hz wird z. B. mit Änderung des Ausgangs von PROM 11 mit jeder 4. Adressenänderung erzielt. Die erforderlichen Schalter- und Phasenschieberstellungen werden an die Schalter und Phasenschieber jedoch nur weitergeleitet, wenn die Register 15...18 von dem taktsynchronisierten Triggerimpuls unmittelbar vor Sendeimpulsen gesetzt werden.

Die PROMs weisen jeweils so viel Adressen auf, wie Schaltzustände notwendig sind, um die steuerbaren Phasenschieber 25, 26 und 27 so zu steuern, daß die gewünschten Seitenbänder erzeugt werden. Die Erzeugung von Seitenbändern mittels steuerbarer Phasenschieber ist an sich bekannt und wird deshalb hier nicht näher erläutert.

Antennentechnisch wird durch die beschriebene Seitenbanderzeugung erreicht, daß eine in den Einzelantennen 32 durch vektorielle Überlagerung der Phasenmoden erzeugte Aperturstromverteilung azimutal umläuft. Die rotierende Stromverteilung verursacht ein mit gleicher Geschwindigkeit umlaufendes Fernfelddiagramm.

**Patentansprüche**

1. TACAN Drehfunkfeuer mit
- einem Sender (1) zur Erzeugung von hochfrequenten, impulsmodulierten Sendersignalen,
- einer Antennenanordnung, welche mehrere auf einer Kreislinie angeordnete Einzelantennen (32) aufweist,
- Modulationsschaltungen (25 - 27) zur Erzeugung jeweils eines oberen und eines unteren Seitenbandes der Trägerfrequenz der Sendersignale im Abstand von 15 Hz bzw. 135 Hz von dieser Trägerfrequenz,
- einem Leistungsverteilungs- und Phasenschiebungsnetzwerk (28 - 31), über das den Einzelantennen (32) jeweils außer der Trägerfrequenz auch deren Seitenbänder mit einer solchen Leistung und Phasenlage zugeführt sind, daß sich entsprechende hochfrequente Phasendrehfelder jeweils unterschiedlicher Ordnungzahl ergeben,
- einer ersten Steuereinrichtung (5 - 9, 17, 22 - 24) für die Modulationcschaltungen,
dadurch gekennzeichnet, daß
- das Leistungsverteilungs- und Phasenschiebungsnetzwerk Schaltmittel (28 - 30) aufweist, welche einen ersten Betriebszustand einnehmen können, in dem die Einzelantennen jeweils gleichzeitig mit der Trägerfrequenz, den beiden 15 Hz Seitenbändern sowie dem einen der beiden 135 Hz Seitenbänder beaufschlagt sind, und einen zweiten Betriebszustand, in dem die Einzelantennen außer mit der Trägerfrequenz und den beiden 15 Hz Seitenbändern mit dem jeweils anderen 135 Hz Seitenband beaufschlagt sind und in dem sich die erzeugten Phasendrehfelder von den dem Trägersignal und den jeweiligen Seitenbändern zugeordneten Phasendrehfeldern des ersten Betriebszustands hinsichtlich des Vorzeichens ihrer Ordnungszahlen unterscheiden und in dem sich außerdem wenigstens ein Phasendrehfeld von dem entsprechenden Phasendrehfeld des ersten Betriebszustandes hinsichtlich der Ordnungszahl selbst unterscheidet, und
- eine mit der ersten Steuereinrichtung synchronisierte zweite Steuereinrichtung (4 - 9, 11, 18 - 21) zur wechselweisen Umschaltung zwischen den beiden Betriebszuständen vorgesehen ist."

2. TACAN-Drehfunkfeuer nach Anspruch 1, dadurch gekennzeichnet, daß die höchste Ordnungszahl der hochfrequenten Phasendrehfelder in den beiden Betriebszuständen betragsmäßig kleiner oder gleich sechs ist.

3. TACAN-Drehfunkfeuer nach Anspruch 2, dadurch gekennzeichnet, daß die Ordnungszahlen der hochfrequenten Phasendrehfelder für den Träger stets ungleich null sind, und daß der Betrag der Differenz der Ordnungszahlen der hochfrequenten Phasendrehfelder für das Trägersignal und das obere bzw. untere 135-Hz-Seitenbandsignal gleich neun ist.

4. TACAN-Drehfunkfeuer nach einem der Ansprüche 1 bis 3, dadurch gekennzeichnet, daß das Umschalten zwischen den beiden Betriebszuständen in den Pausen zwischen zwei in den Sendersignalen enthaltenen Impulsen oder Impulsgruppen erfolgt.

5. TACAN-Drehfunkfeuer nach einem der Ansprüche 1 bis 4, dadurch gekennzeichnet, daß das Leistungsverteilungs- und Phasenschiebungsnetzwerk eine Butler-Matrix ist.

6. TACAN-Drehfunkfeuer nach Anspruch 5, dadurch gekennzeichnet, daß die Butler-Matrix so abgewandelt ist, daß sie weniger Eingänge als Ausgänge aufweist.

7. TACAN-Drehfunkfeuer nach einem der Ansprüche 1 bis 6, dadurch gekennzeichnet, daß die Seitenbänder aus dem Trägersignal mittels steuerbarer Phasenschieber (25, 26, 27) erzeugt werden.

## Claims

1. TACAN beacon comprising
- a transmitter (1) for generating pulse-modulated radio-frequency signals,
- an antenna array comprising a plurality of individual antennas (32) arranged on a circular line,
- modulation circuits (25 - 27) for generating in each case an upper and a lower sideband of the carrier frequency of the transmitter frequency spaced respectively at 15 Hz and 135 Hz from said carrier frequency,
-a power-distribution and phase-shift network (28 - 31) via wich not only the carrier frequency but also its sidebands are in each case fed to the individual antennas (32) with such a power and phase position that corresponding radio-frequency phase-rotation fields of differing ordinal numbers are produced in each case,
- a first control facility (5 - 9, 22 - 24) for the modulation case,
characterized in that
-the power-distribution and phase-shift network comprises switching elements (28 - 30) which can assume a first operating state in which in each case the carrier frequency, the two 15 Hz sidebands and one of the two 135 Hz sidebands are simultaneously applied to the individual antennas and a second operating state in wich not only the carrier frequency and the two 15 Hz sidebands but also the other 135 Hz sideband are applied to the individual antennas and in wich the phase-rotation fields generated differ in the sign of their ordinal numbers from the phase-rotation fields of the first operating each case and in which furthermore at least one phase-nation field differs from the phase-rotation field of the first operating state as regards the ordinal number itself, and
-a second control facility (4 - 9, 11, 18 - 21), synchronized with the first control facility is provided for alternate switching between the two operating states.

2. A TACAN beacon as claimed in Claim 1, characterized in that, in both operating states, the absolute value of the largest ordinal number of the radio-frequency phase-rotation fields is smaller than or equal to six.

3. A TACAN beacon as claimed in Claim 2, characterized in that the ordinal numnbers of the radio-frequency phase-rotation fields for the carrier are always different from zero, and that the absolute value of the difference between the ordinal numbers of the radio-frequency phase-rotation fields for the carrier signal and for the upper or lowver 135 Hz sidenband signal is equal to nine.

4. A TACAN beacon as claimed in any one of Claims 1 to 3, characterized in that switching between the two operating states takes place in the intervals between two pulses or pulse groups contained in the transmitter signals.

5. A TACAN beacon as claimed in any one of Claims 1 to 4, characterized in that the power-distribution and phase-shift network is a Butler matrix.

6. A TACAN beacon as claimed in Claim 5, characterized in that the Butler matrix is modified so as to have fewer inputs than outputs.

7. A TACAN beacon as claimed in any one of Claims 1 to 6, characterized in that the sidebands are derived from the carrier signal by means of controllable phase shifters (25, 26, 27).

## Revendications

1. Balise TACAN comportant:
- un émetteur (1) engendrant un signal d'émission HF modulé en impulsions,
- un agencement d'antenne comprenant plusieurs antennes élémentaires (32) disposées en cercle,
- des circuits de modulation (25 - 27) engendrant respectivement une bande latérale supérieure et une bande latérale inférieure de la fréquence porteuse du signal d'emission, à des distances respectives de 15 Hz et 135 Hz de cette fréquence porteuse,
- un réseau de répartition et de déphasage (28 - 31) par lequel les éléments d'antenne (32) reçoivent chacun non seulement la fréquence porteuse, mais aussi ses bandes latérales, avec une puissance et une phase telles que les champs HF à rotation de phase correspondants possèdent respectivement des nombres ordinaux différents,
- un premier dispositif de commande (5 - 9, 17, 22 -24) pour les circui ts de modulation,
<u>caractérisé en ce que</u>
- le réseau de répartition et de déphasage comprend des moyens de commutation (28 - 30), lesquels peuvent occuper un premier état de fonctionnement dans lequel les antennes élémentaires reçoivent chacune en synchronisme la fréquence part euse, les deux bandes latérales à 15 Hz, ainsi qu'une des deux bandes latérales à 135 Hz, et un deuxième état de fonctionnement, dans lequel les antennes élémentaires, autre la fréquence porteuse et les deux bandes latérales à 15 Hz, reçoivent chacune l'autre bande latérale à 135 Hz et dans lequel les champs a rotation de phase se distinguent des champs a rotation de phase correspondant au signal de porteuse et aux bandes latérales respectives du premier état de fonctionnement, en ce qui concerne les signes qui s'attachent a leurs nombres ordinaux, et dans lequel, en outre au moins un champ a ratation de phase se distingue lui-même du champ correspondant du premier état de fonctionnment, en ce qui concerne le nombre ordinal, et
- un deuxième agencement de commande (4 - 9, 11, 18 - 21), synchronisé avec le premier, est prévu pour la commutation réciproque entre les deux états de fonctionnement.

2. Balise TACAN conforme a la revendication 1, caractérisée en ce que, dans les deux états de fonctionnement, la valeur absolue du nombre ordinal le plus élevé des champs HF à rotation de phase est égale ou inférieure à six.

3. Balise TACAN conforme à la revendication 2, caractérisée en ce que les nombres ordinaux des champs HF à rotation de phase de l'onde porteuse sont toujours différents de zéro et en ce que la valeur absolue de la différence entre les nombres ordinaux des champs HF à rotation de phase du signal porteur et du signal de bande latérale supérieure ou inférieure a 135 Hz est égale à neuf.

4. Balise TACAN conforme à l'une quelconque des revendicatians 1 à 3, caractérisée en ce que la commutation entre les deux états de fonctionnement a lieu dans l'intervalle entre deux impulsions ou groupes d'impulsions contenues dans le signal d'émission.

5. Balise TACAN conforme à l'une quelconque des revendications 1 à 4, caractérisée en ce que le réseau de répartition et de déphasage est une matrice de Buttler.

6. Balise TACAN conforme à la revendication 5, caractérisée en ce que la matrice de Buttler est modifiée de manière à avoir moins d'entrées que de sorties.

7. Balise TACAN conforme à l'une quelconque des revendications 1 à 6, caractérisée en ce que les bandes latérales sont dérivées du signal porteur à l'aide de dèphaseurs commutables (25, 26, 27).